# EUROPEAN PATENT APPLICATION

(11) **EP 4 625 293 A1**
(43) Date of publication of application: **01.10.2025**
(21) Application number: 25152381.7
(22) Date of filing: 16.01.2025
(51) Int. Cl.: G06Q 20/20, G06Q 20/40, G07G 1/00

(54) **TRANSACTION PROCESSING SYSTEM, TRANSACTION PROCESSING DEVICE, AND TRANSACTION PROCESSING METHOD**

(30) Priority: 26.03.2024 JP 2024049781
(71) Applicant: Toshiba TEC Kabushiki Kaisha, Tokyo 141-8562 (JP)
(72) Inventor: Gyougei, Tou, Tokyo, 141-8562 (JP)
(74) Representative: Bandpay & Greuter

(57) **Abstract**

According to one embodiment, a transaction processing system includes a storage device configured to store membership identification information of a member and settlement medium information of the member in association with biometric information of the member. The system further includes a transaction processing device and a reading device to read biometric information from a user. The transaction processing device receives the biometric information of the user read by the reading device, acquires information from the storage device when the received biometric information of the user matches biometric information of the member stored in the storage device, and settles a transaction of the user without additional authentication if the acquired information from the storage device includes a member ID and settlement medium information.

## Description

### FIELD

Embodiments described herein relate generally relates to a transaction processing system, a transaction processing device used in the system, and a transaction processing method.

### BACKGROUND

Recently, a user who desires to receive a membership service such as point granting, a membership discount, or promotional discounts when making a transaction at a store needs to perform membership registration or the like with store. For example, a user may need to use a card reader of a transaction processing device to read a previously provided membership card. Alternatively, the user may use a scanner of the transaction processing device to read a membership bar code displayed on the customer's smartphone. In this context, a membership registration can be performed by any permissible method, to allow the user to receive membership services.

On the other hand, cashless payment methods such as credit card, electronic money, and code settlement are becoming more common in recent years. When using cashless methods, a user typically causes a card reader of a transaction processing device to read a card compatible with the cashless settlement method. Alternatively, the user causes a scanner of the transaction processing device to read a bar code displayed on a smartphone for cashless settlement. In general, personal authentication for allowing a user to pay the transaction price cashlessly can be performed by any available method.

However, when a user who desires to receive a membership service pays using a cashless method, an operation for membership registration and an operation for personal authentication are required. For these operations, a card or a smartphone with pre-installed application software is required. Therefore, the unregistered or newly registered user cannot receive the membership service and cannot pay using the cashless method unless the user possesses a card or smartphone with the application software installed.

### DISCLOSURE OF INVENTION

To this end, there is provided a transaction processing system according to claim 1. There is also provided a transaction processing device according to claim 11. There is further provided a non-transitory, computer-readable medium storing program instructions according to claim 14. Preferred embodiments are set out in the dependent claims.

### BRIEF DESCRIPTION OF THE DRAWINGS

FIG. 1 is a schematic diagram of a transaction processing system according to one embodiment.
FIG. 2 is a schematic diagram illustrating a data structure of a customer record.
FIG. 3 is a block diagram of a self-service POS terminal.
FIG. 4 is a block diagram illustrating functional aspects of a self-service POS terminal.
FIG. 5 is a flowchart of information processing executed by a processor of a self-service POS terminal.
FIG. 6 is a flowchart of information processing executed by a processor of a self-service POS terminal.
FIG. 7 is a flowchart illustrating a point settlement process executed by a processor of a self-service POS terminal.
FIG. 8 is a flowchart illustrating a credit settlement process executed by a processor of a self-service POS terminal.
FIG. 9 shows an example of a start screen displayed on a touch panel of a self-service POS terminal.
FIG. 10 shows an example of a biometric authentication screen displayed on a touch panel of a self-service POS terminal.
FIG. 11 shows an example of a registration screen displayed on a touch panel of a self-service POS terminal.
FIG. 12 shows an example of a payment selection screen displayed on a touch panel of a self-service POS terminal.
FIG. 13 shows an example of a point payment screen displayed on a touch panel of a self-service POS terminal.
FIG. 14 shows an example of a card selection screen displayed on a touch panel of a self-service POS terminal.
FIG. 15 shows an example of a card determination screen displayed on a touch panel of a self-service POS terminal.

### DETAILED DESCRIPTION

In general, according to one embodiment, a transaction processing system and device is provided to enable a membership service and cashless settlement without requiring the user to have or carry a card or an information terminal such as a smartphone.

According to one embodiment, a transaction processing system includes a storage device configured to store membership identification information of a member and settlement medium information of the member in association with biometric information of the member. The system further includes a reading device configured to read biometric information from a user and a transaction processing device configured to receive the biometric information of the user read by the reading device, acquire information from the storage device when the received biometric information of the user matches biometric information of the member stored in the storage device, and settle a transaction of the user without additional authentication if the acquired information from the storage device includes a member ID and settlement medium information.

Hereinafter, an example embodiment of a transaction processing system that enables a membership service and cashless settlement to be provided even when the customer is without a card or a smartphone will be described with reference to the drawings.

### Description of Transaction Processing System

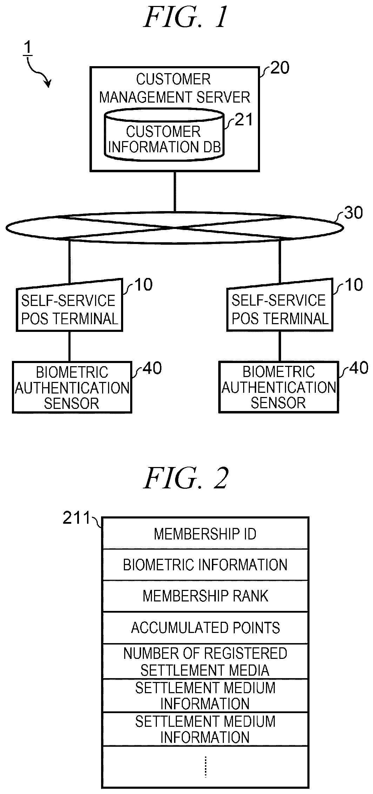

FIG. 1 is a schematic diagram of a transaction processing system 1 according to one embodiment. The transaction processing system 1 includes a plurality of self-service POS terminals 10 and a customer management server 20. The transaction processing system 1 connects each self-service POS terminal 10 and the customer management server 20 via a communication network 30. The communication network 30 can be a wide area network such as the Internet or an intranet. A mobile communication network, a public communication network, or the like may be used as a part of the communication network 30.

The self-service POS terminal 10 is installed in a checkout place of a retail store that provides a membership service such as point granting, a membership discount, and/or the like. The self-service POS terminal 10 is a self-service type transaction processing device that processes a commercial transaction with a customer by the customer performing a registration operation and a settlement operation of commodities the customer collected for purchase from a sales floor. In FIG. 1, the self-service POS terminals 10 are not necessarily installed in the same store. For example, the self-service POS terminals 10 can be installed in different stores that provide or share the same membership service. For examples, the different stores may be part of a chain of stores at different locations or tenants in the same shopping center, but may still be connected to the communication network 30.

The self-service POS terminal 10 is connected to a biometric authentication sensor 40. The biometric authentication sensor 40 is a sensor for detecting biometric information to be used in an authentication method for identifying a person (customer). The biometric authentication sensor 40 is an example of a reading device that reads biometric information of a user. Examples of the biometric information include fingerprint information used for fingerprint authentication, palm print information used for palm print authentication, iris information used for iris authentication, and face information used for facial authentication. In the present embodiment, the biometric information is fingerprint information. That is, the biometric authentication sensor 40 is a fingerprint sensor. The fingerprint sensor may be a capacitive fingerprint sensor or an optical fingerprint sensor.

The customer management server 20 is a server-type computer for managing information about a customer who becomes a member of a membership service, e.g., a customer loyalty program or the like. The customer management server 20 includes a customer information database 21. The customer information database 21 is a collection of customer records 211 (see FIG. 2) created for each customer who is a member of the membership service.

FIG. 2 is a schematic diagram illustrating a data structure of the customer record 211. As illustrated, the customer record 211 includes a membership ID, biometric information, a membership rank, accumulated points, the number of different registered settlement mediums (media), and settlement medium information for each registered settlement medium.

The membership ID is a unique code assigned to each customer who becomes a member. A unique membership ID is assigned to the customer when the customer signs up for a membership. The membership ID is not duplicated with other customers. For a customer who becomes a member, a membership card with the membership ID is issued. Alternatively, application software on a smartphone possessed by the customer may be provided. By activating the application software, a bar code or a two-dimensional code representing the membership ID of the customer can be displayed on a display of the smartphone.

In this context, the biometric information is the information used for biometric authentication of the customer corresponding to the membership ID. The biometric information is fingerprint information in the present embodiment. The customer who becomes a member can register the biometric information in the customer management server 20 at any time.

The membership rank is the member's rank within a membership ranking system that ranks or groups customers according to membership program conditions or otherwise. The rank may be tied to differences in, or availability of, preferential services. The rank may be determined based on conditions such as the total number of visits, a completed sales amount, and/or length of membership. In general, the higher the rank, the greater the preferential service that can be received. For example, a multiplier to be used when calculating points and/or a discount rate to be applied in membership discounts may vary depending on the rank.

The accumulated points are the number of points granted to the customer for previous transactions or the like. The customer can use the accumulated points to pay a price of a commercial transaction, with 1 point being equivalent to 1 yen, for example.

The number of registered settlement media is the number of different settlement media that been registered in advance by the customer. The settlement medium can be any medium that holds information related to cashless settlement such as a credit card or electronic money service. In the present embodiment, a settlement medium that can be registered in the customer management server 20 is a credit card. Therefore, the settlement medium information entry is credit card information. For example, a credit card number, identification information on a credit card issuer, and the like correspond to the settlement medium information. The settlement medium information may include an expiration date of the credit card, and the like. A customer who becomes a membership can register information on one or more credit cards in the customer management server 20. The customer need not register any credit card information. In the customer record 211 of a customer whose credit card information is not registered, the number of registered settlement media is "0".

The registration method to be used for providing the biometric information and the settlement medium information is not particularly limited. For example, after inputting the membership ID into a membership registration terminal, a fingerprint to be used for fingerprint authentication can be read by a fingerprint sensor. By performing such an operation, fingerprint information can be registered as the biometric information of the customer in the customer record 211 including the corresponding membership ID. On the other hand, information about a credit card (serving as the settlement medium information) may be registered via a website of a management company that operates the customer management server, for example.

As described above, the customer management server 20 stores, in the customer information database 21, the fingerprint information (which is the biometric information on the member), the membership ID (which is the membership identification information), and the information about a credit card (which is a settlement medium possessed by the member). Here, the customer management server 20 functions as a storage device that stores, in association with the biometric information, the membership identification information and the information about the settlement medium.

The customer management server 20 including such a customer information database 21 may provide a customer management service in an on-premise environment or may provide a customer management service in a cloud-computing environment.

### Description of Hardware Configuration of Transaction Processing Device (Self-service POS Terminal)

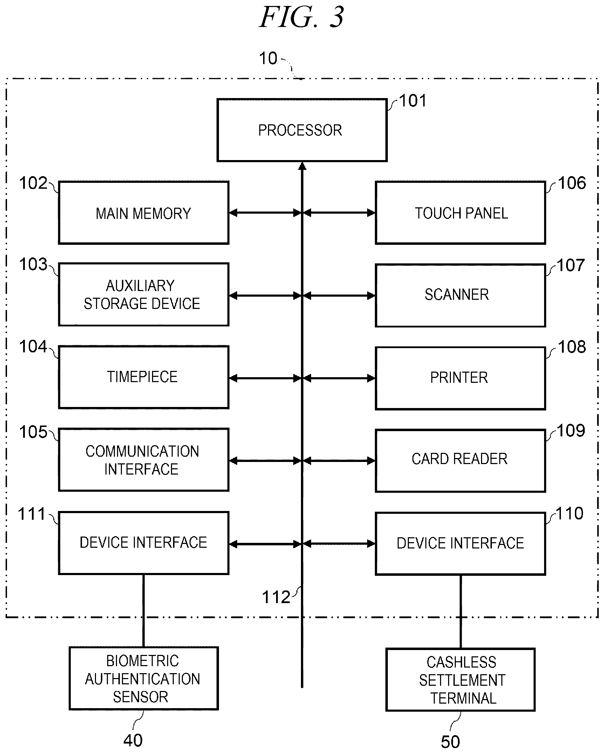

FIG. 3 is a block diagram of the self-service POS terminal 10. The self-service POS terminal 10 includes a processor 101, a main memory 102, an auxiliary storage device 103, a timepiece 104, a communication interface 105, a touch panel 106, a scanner 107, a printer 108, a card reader 109, a first device interface 110, a second device interface 111, and a system transmission line 112. The system transmission line 112 includes an address bus, a data bus, a control signal line, and the like. The system transmission line 112 connects the processor 101 and other units directly or via a signal input and output (I/O) circuit, and transmits data signals exchanged therebetween.

In the self-service POS terminal 10, the processor 101, the main memory 102, the auxiliary storage device 103, the timepiece 104, and the communication interface 105 are connected through the system transmission line 112. In the self-service POS terminal 10, various devices such as the touch panel 106, the scanner 107, the printer 108, and the card reader 109, the first device interface 110, and the second device interface 111 are also connected via the system transmission line 112.

The processor 101 controls each unit to implement various functions of the self-service POS terminal 10 in accordance with an operating system and/or an application program. The processor 101 is, for example, a central processing unit (CPU).

The main memory 102 includes a nonvolatile memory area and a volatile memory area. The main memory 102 stores the operating system or the application program in the nonvolatile memory area. The main memory 102 may store, in the nonvolatile or volatile memory area, data necessary for the processor 101 to execute a process for controlling the units. In the main memory 102, the volatile memory area is used as a work area where data is rewritten as appropriate by the processor 101. The non-volatile memory area is, for example, a read only memory (ROM). The volatile memory area is, for example, a random access memory (RAM).

For example, the auxiliary storage device 103 may be an electric erasable programmable read-only memory (EEPROM^{®}), a hard disc drive (HDD), a solid-state drive (SSD), or the like. The auxiliary storage device 103 stores data used by the processor 101 to perform various processes, data generated by the process in the processor 101, and the like. The auxiliary storage device 103 may store the application program.

The timepiece 104 tracks a date and time. The processor 101 processes the date and time tracked by the timepiece 104 as a current date and time.

The communication interface 105 is for performing data communication with the customer management server 20 or other elements connected via the communication network 30. That is, the communication interface 105 functions as a communication unit that communicates with a storage device that stores the membership identification information and the information about the settlement medium in association with the biometric information of the member.

The touch panel 106 is a device that functions as both a display device and an input device for an operator. The operator is typically a customer who performs checkout in a commercial transaction. A store clerk may be the operator in some examples. The display device is a panel-type display such as a liquid crystal display. The input device is a touch sensor disposed on a screen of a panel-type display.

The scanner 107 is an input device that scans and reads a machine readable code such as a bar code or a two-dimensional code. A bar code or two-dimensional code representing a commodity code uniquely set for the commodity is attached to most commodities being sold in the store. The self-service POS terminal 10 identifies a commodity based on a commodity code obtained by decoding the bar code or two-dimensional code read by the scanner 107, and registers sales data of the corresponding commodity. The scanner 107 can also read a bar code or two-dimensional code for a code settlement.

The printer 108 is a receipt printer. The printer 108 dispenses a purchase receipt on which details of a commercial transaction are recorded.

The card reader 109 is an input device that reads data recorded on a card medium such as a membership card. If the card medium is an IC card (integrated circuit card), the card reader 109 is an IC card reader. If the card medium is a magnetic card, the card reader 109 is a magnetic card reader.

The first device interface 110 is for performing data communication with a cashless settlement terminal 50 for cashless settlement such as for credit card settlement and electronic money settlement. The cashless settlement terminal 50 reads card data of a credit card, an electronic money card, or the like, communicates with a credit card server, an electronic money server, or the like, and processes a cashless settlement transaction. The cashless settlement terminal 50 includes a pin pad for inputting a personal identification number of a credit card or the like.

The second device interface 111 for performing data communication with the biometric authentication sensor 40. The second device interface 111 acquires fingerprint information read by the biometric authentication sensor 40.

### Description of Functional Configuration of Transaction Processing Device (Self-service POS Terminal)

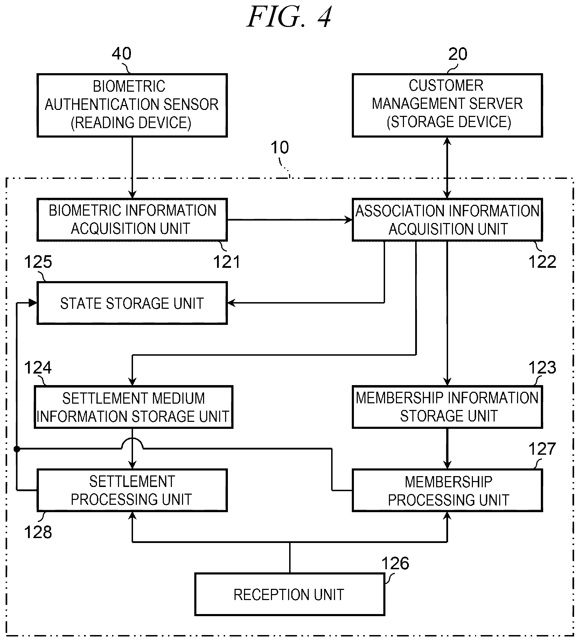

FIG. 4 is a block diagram illustrating functional aspects of the self-service POS terminal 10. The self-service POS terminal 10 provides the functions of a biometric information acquisition unit 121, an association information acquisition unit 122, a membership information storage unit 123, a settlement medium information storage unit 124, a state storage unit 125, a reception unit 126, a membership processing unit 127, and a settlement processing unit 128.

The biometric information acquisition unit 121 acquires biometric information (fingerprint information) of a user that has been read by the biometric authentication sensor 40. The association information acquisition unit 122 acquires the membership information and the settlement medium information stored in the customer information database 21 of the customer management server 20. The membership information storage unit 123 stores the membership information acquired by the association information acquisition unit 122 (that is, the membership ID, the membership rank, the accumulated points, and the like). The settlement medium information storage unit 124 stores the settlement medium information acquired by the association information acquisition unit 122 (the information on one or more credit cards).

After the membership identification information and the information about the settlement medium are acquired by the association information acquisition unit 122, the state storage unit 125 stores a value indicating a first state. If only the membership identification information is acquired by the association information acquisition unit 122, the state storage unit 125 stores a value indicating a second state. If neither the membership identification information nor the information about the settlement medium is acquired by the association information acquisition unit 122, the state storage unit 125 stores a value indicating a third state.

The reception unit 126 receives a user's input selecting a payment method for settling a transaction. The available payment methods includes at least credit card payment and point payment in this example. When point payment is selected as the payment method, the membership processing unit 127 functions. When the credit card is selected as the payment method, the settlement processing unit 128 functions.

If the membership identification information is acquired by the association information acquisition unit 122, the membership processing unit 127 processes the transaction. More specifically, the membership processing unit 127 performs different processes depending on the value stored in the state storage unit 125. That is, if the membership identification information was not acquired by the association information acquisition unit 122 (that is, if the third value is stored in the state storage unit 125) the membership processing unit 127 waits for input of the membership identification information. In response to the input of the membership identification information from this state, the membership processing unit 127 processes the accumulated points of the member identified by the membership identification information as a payment amount for the transaction. On the other hand, if the membership identification information was acquired by the association information acquisition unit 122 (that is, if the first or second value is stored in the state storage unit 125), the membership processing unit 127 processes the accumulated points of the member without inputting the membership identification information for the payment amount of the transaction.

If the settlement medium information is acquired by the association information acquisition unit 122, the settlement processing unit 128 settles the transaction with the settlement medium information. More specifically, the settlement processing unit 128 performs different processes depending on the value stored in the state storage unit 125. That is, if the settlement medium information was not acquired by the association information acquisition unit 122 (that is, if the first or second value is stored in the state storage unit 125), the settlement processing unit 128 waits for information for another credit card to be used by the user and the input of a personal identification number. In response to the input of the information on the credit card and the personal identification number via the cashless settlement terminal 50, the settlement processing unit 128 settles the transaction with the credit card. On the other hand, if the settlement medium information is acquired by the association information acquisition unit 122 (that is, if the third value is stored in the state storage unit 125), the settlement processing unit 128 settles the transaction with the credit card matching the settlement medium information without requiring the input of the personal identification number.

The functions of the biometric information acquisition unit 121, the association information acquisition unit 122, the membership information storage unit 123, the settlement medium information storage unit 124, the state storage unit 125, the reception unit 126, the membership processing unit 127, and the settlement processing unit 128 can be implemented by an information processing executed by the processor 101 of the self-service POS terminal 10 according to predetermined application software. Hereinafter, the program is referred to as a transaction processing program. The transaction processing program is a type of application program stored in the main memory 102 or the auxiliary storage device 103. A method for installing the transaction processing program into the main memory 102 or the auxiliary storage device 103 is not particularly limited. The transaction processing program can be installed in the main memory 102 or the auxiliary storage device 103 by being recorded on a removable recording medium or being distributed by communication via a network. The recording medium may be in any form as long as the recording medium can store programs and is readable by devices, such as a CD-ROM or a memory card.

### Description of Operation of Transaction Processing Device (Self-service POS Terminal)

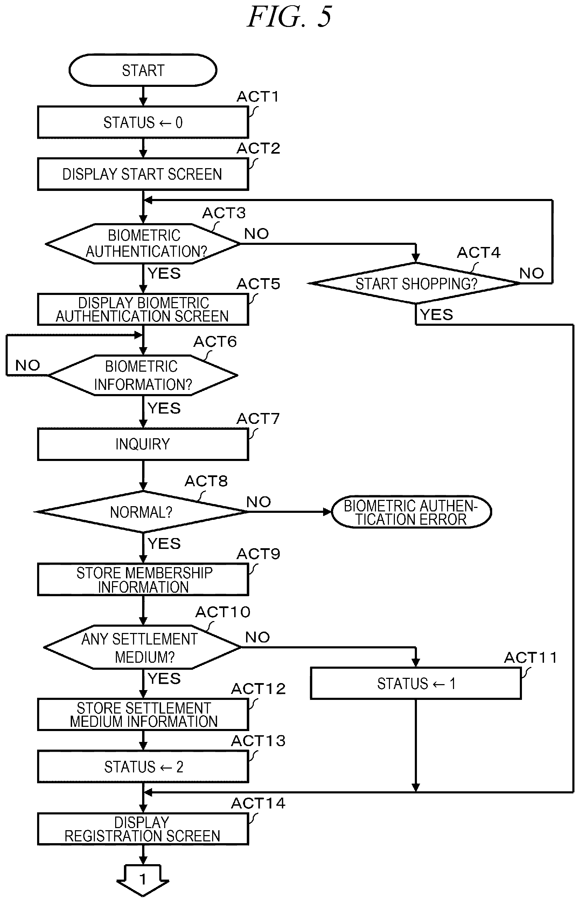

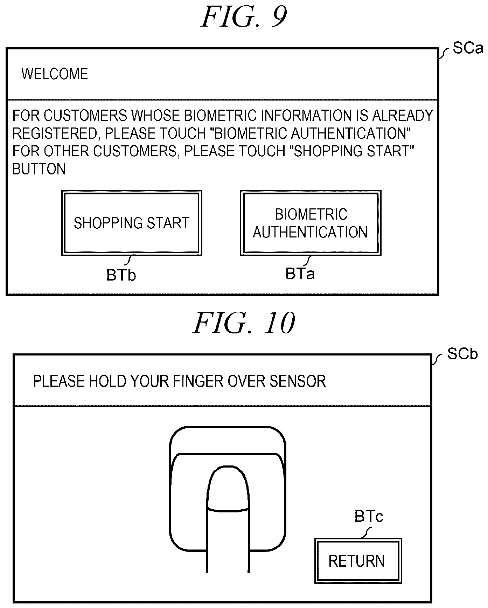

FIGS. 5 to 8 are flowcharts of the information processing executed by the processor 101 of the self-service POS terminal 10 according to the transaction processing program. FIGS. 9 to 15 show examples of screens displayed on the touch panel 106 of the self-service POS terminal 10 during the information processing. Hereinafter, an example operation of the self-service POS terminal 10 will be described with reference to the drawings. The details of the procedure of the information processing described below is merely one example. The content and the procedure can be appropriately changed as long as the same effects can be achieved. The various screens are also only examples, and the text, images, layouts, and the like can be appropriately changed.

The processor 101 of the self-service POS terminal 10 begins in an idle state according to a procedure shown in the flowchart in FIG. 5. First, in ACT 1, the processor 101 sets the status stored in a status memory to a default value "0". The status memory is a part of a volatile memory area in the main memory 102. After setting the status to "0", the processor 101 proceeds to ACT 2. In ACT 2, the processor 101 sets a screen of the touch panel 106 to a start screen SCa (see FIG. 9).

FIG. 9 shows a display example of the start screen SCa. As illustrated, the start screen SCa has a biometric authentication button BTa and a shopping start button BTb arranged thereon, together with operation guidance for a customer. The biometric authentication button BTa and the shopping start button BTb are software keys. As indicated by the operation guidance, the biometric authentication button BTa is an operation piece that is operated (touched) by a customer whose biometric information, that is, fingerprint information, has been registered in the customer management server 20. The shopping start button BTb is an operation piece that is operated (touched) by a customer whose biometric information has not been registered in the customer management server 20.

After viewing the start screen SCa, the customer touches the biometric authentication button BTa or the shopping start button BTb. Specifically, the customer whose fingerprint information has been registered in the customer management server 20 touches the biometric authentication button BTa. Other customers touch the shopping start button BTb. The registered customer is not prohibited from touching the shopping start button BTb.

The processor 101 waits for selection of the biometric authentication button BTa (in ACT 3) or selection of the shopping start button BTb (in ACT 4). If the shopping start button BTb is selected in a standby state of ACT 3 and ACT 4, the processor 101 proceeds to ACT 14. The process in ACT 14 and processes subsequent to ACT 14 will be described later.

If the biometric authentication button BTa is selected in the standby state of ACT 3 and ACT 4, the processor 101 proceeds to ACT 5. In ACT 5, the processor 101 switches the screen of the touch panel 106 to a biometric authentication screen SCb (see FIG. 10).

FIG. 10 shows a display example of the biometric authentication screen SCb. As illustrated, the biometric authentication screen SCb is a screen on which an image for guiding a customer to perform biometric authentication using the biometric authentication sensor 40, that is, to read a fingerprint is displayed. The biometric authentication screen SCb has a return button BTc arranged thereon as well. The return button BTc is for instructing to return to the immediately preceding screen, that is, the start screen SCa.

After reviewing the biometric authentication screen SCb, the customer holds a finger over the biometric authentication sensor 40 to read the fingerprint of that finger. A customer who touches the shopping start button BTb although the fingerprint information is not registered in the customer management server 20 may touch the return button BTc.

In ACT 6, the processor 101 waits for acquisition of the biometric information. If the return button BTc is selected in a standby state, the processor 101 returns to the process in ACT 2. That is, the processor 101 returns the screen of the touch panel 106 to the start screen SCa.

If the biometric information read by the biometric authentication sensor 40 is acquired via the second device interface 111 in a standby state in ACT 6, the processor 101 proceeds to ACT 7. In ACT 7, the processor 101 controls the communication interface 105 to transmit an inquiry command to the customer management server 20. By this control, the inquiry command is transmitted to the customer management server 20 via the communication network 30. The inquiry command includes the biometric information acquired in the process of ACT 6.

After receiving the inquiry command, the customer management server 20 searches the customer information database 21. The customer management server 20 detects biometric information matching the biometric information included in the inquiry command. That is, customer management server 20 finds a matching customer record 211 in which the provided fingerprint information is registered. After finding the corresponding customer record 211, the customer management server 20 transmits a normal response command to the self-service POS terminal 10 from which the inquiry command was transmitted. The normal response command includes the membership information included in the matching customer record 211, that is, data of the membership ID, the membership rank, and the accumulated points, the number of registered settlement media, and the settlement medium information for the number of registered settlement media. If a customer record 211 matching the provided biometric information cannot be detected in the customer information database 21, the customer management server 20 transmits an error response command to the self-service POS terminal 10 from which the inquiry command was transmitted.

After transmitting the inquiry command, the processor 101 of the self-service POS terminal 10 waits for a response command in ACT 8. If an error response command is received from the customer management server 20, the processor 101 notifies a biometric authentication error. Once the biometric authentication error is cleared, the processor 101 returns to ACT 2. That is, the screen of the touch panel 106 is returned to the start screen SCa. Therefore, when a customer is notified of the biometric authentication error, the customer touches the biometric authentication button BTa again and holds the finger over the biometric authentication sensor 40 or otherwise touches the shopping start button BTb.

If the normal response command is received from the customer management server 20 in ACT 8, the processor 101 proceeds to ACT 9. In ACT 9, the processor 101 stores, in a membership information memory, the membership information included in the normal response command. The membership information memory is a part of the volatile memory area in the main memory 102.

After storing the membership information, the processor 101 proceeds to ACT 10. The processor 101 checks whether settlement medium information is included in the normal response command in ACT 10. If the number of registered settlement medium included in the normal response command is "0", the normal response command does not include any settlement medium information. The processor 101 proceeds to ACT 11. The processor 101 changes the status of the status memory to "1" in ACT 11. Thereafter, the processor 101 proceeds to ACT 14.

In ACT 10, if the number of registered settlement medium is "1" or more, the normal response command includes settlement medium information. The processor 101 proceeds to ACT 12. The processor 101 stores the settlement medium information in a settlement medium information memory in ACT 12. The settlement medium information memory is a part of the volatile memory area in the main memory 102. After storing the settlement medium information, the processor 101 proceeds to ACT 13. The processor 101 changes the status of the status memory to "2" in ACT 13. Thereafter, the processor 101 proceeds to ACT 14.

As described above, if the biometric authentication button BTa on the start screen SCa is selected (YES in ACT 3), the processor 101 acquires biometric information from the biometric authentication sensor 40 (ACT 5, ACT 6). The processor 101 transmits the inquiry command including the biometric information to the customer management server 20 and waits for a response command (ACT 7 and ACT 8). After the response command is received, the processor 101 stores the membership information included in the response command in the membership information memory (ACT 9). If settlement identification information is included in the response command, the processor 101 stores the settlement identification information in a settlement identification information memory and sets the status of the status memory to "2" (YES in ACT 10, ACT 12, and ACT 13). If the settlement identification information is not included in the response command, the processor 101 sets the status of the status memory to "1" (NO in ACT 10, then ACT 11). Thereafter, the processor 101 proceeds to ACT 14. On the other hand, if the shopping start button BTb on the start screen SCa is selected, the processor 101 proceeds to ACT 14 while keeping the status "0".

Here, the processor 101 executes the processes in ACT 5 and ACT 6 in cooperation with the second device interface 111, thereby implementing the functions of the biometric information acquisition unit 121. The processor 101 executes the processes in ACT 7 and ACT 8 in cooperation with the communication interface 105, thereby implementing the functions of the association information acquisition unit 122. The processor 101 executes the process in ACT 9 in cooperation with the membership information memory, thereby implementing the functions of the membership information storage unit 123. The processor 101 executes the process in ACT 12 in cooperation with the settlement medium information memory, thereby implementing the functions of the settlement medium information storage unit 124. The processor 101 executes the processes in ACT 2, ACT 11, and ACT 13 in cooperation with the status memory, thereby implementing the functions of the state storage unit 125. The status value "2" is a value indicating the first state in which the membership identification information and the information on the settlement medium are acquired by the association information acquisition unit 122. The status value "1" is a value indicating the second state in which only the membership identification information is acquired by the association information acquisition unit 122. The status value "0" is a value indicating the third state in which neither the membership identification information nor the settlement medium information is acquired.

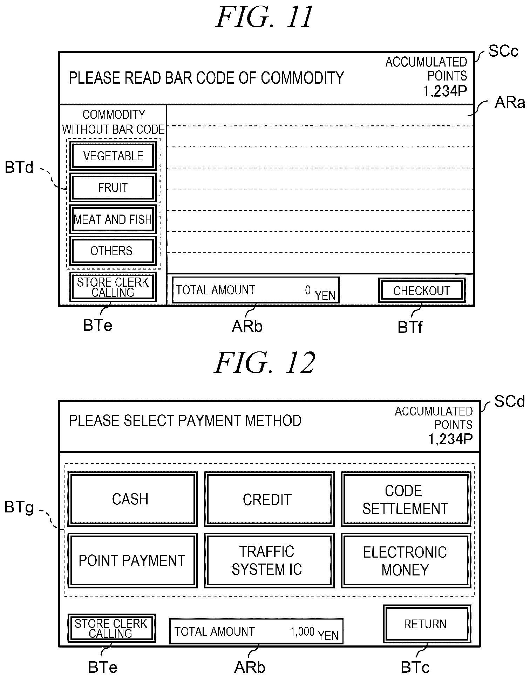

In ACT 14, the processor 101 sets the screen of the touch panel 106 to a registration screen SCc (see FIG. 11).

FIG. 11 shows an example of the registration screen SCc. As illustrated, the registration screen SCc includes a plurality of rows of detail areas ARa and a total amount area ARb. The registration screen SCc includes a button group BTd of "vegetable", "fruit", "meat and fish", and "others", a store clerk calling button BTe, and a checkout button BTf. The detail area ARa displays a commodity name, a price, and the like of a commodity registered for sale in a list form. The total amount area ARb displays a total amount of commodities registered for sale. The button group BTd is for displaying a list of commodities to which a bar code is not attached on the touch panel 106. For example, when the "vegetable" button is touched, a list of vegetables is displayed on the touch panel 106. The store clerk calling button BTe is operated when a customer desires to call a store clerk. The checkout button BTfis touched by a customer when the registration of commodities for purchase is finished so the process can proceed to checkout (payment). The checkout button BTf is for instructing checkout.

The registration screen SCc displays accumulated points (1,234P in the present example) on a part thereof. The accumulated points are included in the membership information stored in the membership information memory. That is, the registration screen SCc illustrated in FIG. 11 is a registration screen shown when the status value is "1" or "2". The accumulated points are not displayed on the registration screen SCc when the status value is "0".

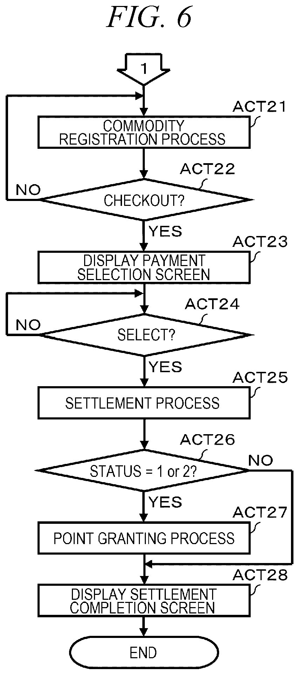

The processor 101 of the self-service POS terminal 10 proceeds to ACT 21 in FIG. 6. The processor 101 executes a commodity registration process in ACT 21. In the process, in response to the input of a commodity code of a commodity to be purchased, sales data of the commodity identified by the commodity code is registered in a transaction memory. The commodity code is input by scanning a bar code for the commodity using the scanner 107. Alternatively, the commodity code can be input by selecting a commodity from a list displayed on the touch panel 106. Once the commodity registration process is executed, a commodity name, a price, and the like of the commodity are displayed in the detail area ARa on the registration screen SCc. The total amount in the total amount area ARb is updated. The processor 101 repeatedly executes the commodity registration process until the checkout button BTf is selected.

The processor 101 waits for pressing of the checkout button BTfin ACT 22. After the checkout button BTf is pressed, the processor 101 proceeds to ACT 23. In ACT 23, the processor 101 sets the screen of the touch panel 106 to a payment selection screen SCd (see FIG. 12).

FIG. 12 shows an example of the payment selection screen SCd. As illustrated, the payment selection screen SCd has arranged thereon a button group BTg of "cash", "credit", "code settlement", "point payment", "traffic system IC", and "electronic money", a store clerk calling button BTe, and a return button BTc. The payment selection screen SCd includes the total amount area ARb. Further, the payment selection screen SCd displays the accumulated points when available.

On the payment selection screen SCd, the accumulated points (1,234P) are displayed on a part thereof. That is, the payment selection screen SCd illustrated in FIG. 12 is a payment selection screen shown when the status value is "1" or "2". The accumulated points are not displayed on the payment selection screen SCd if the status value is "0".

The button group BTg is for selecting a payment method. That is, the "cash" is an operation piece for selecting cash payment. The "credit" is an operation piece for selecting credit card payment. The "code settlement" is an operation piece for selecting code settlement. The "point payment" is an operation piece for selecting payment using accumulated points. The "traffic system IC" is an operation piece for selecting payment using electronic money of a traffic system IC. The "electronic money" is an operation piece for selecting payment using electronic money other than a traffic system IC.

The processor 101 waits for selection of any payment method in ACT 24. Once the payment method is selected, the processor 101 proceeds to ACT 25. The processor 101 executes a settlement process according to the selected payment method in ACT 25. That is, if the "cash" button is selected, a cash settlement process is executed. If the "credit" button is selected, a credit settlement process is executed. If the "code settlement" button is selected, a code settlement process is executed. If the "point payment" button is selected, a point settlement process is executed. If the "traffic system IC" button or the "electronic money" button is selected, an electronic money settlement process is executed.

The point settlement process and the credit settlement process will be described later. Basic cash settlement processes, code settlement processes, and electronic money settlement processes are the same as in the related art.

Once the settlement process is completed, the processor 101 proceeds to ACT 26. In ACT 26, the processor 101 checks the status value. If the status value is "1" or "2", the processor 101 proceeds to ACT 27. The processor 101 executes a point granting process in ACT 27. If the status value is "0", the processor 101 skips the process in ACT 27. That is, the processor 101 does not execute the point granting process.

The point granting process is a process of determining points to be granted to the customer and transmitting a point granting command to the customer management server 20. For example, if implementing a point service in which one point is granted for each visit to the store, a point granting command including one point is transmitted to the customer management server 20. If implementing a point service in which one point is granted for every 100 yen in sales, a point granting command including the appropriate points is transmitted to the customer management server 20. If changing or adjusting points to be granted for a transaction depending on membership rank, the points included in the point granting command may be updated according to the membership rank stored in the membership information memory before being transmitted to the customer management server 20.

The point granting command also includes the membership ID stored in the membership information memory. After receiving the point granting command, the customer management server 20 adds points to the accumulated points corresponding to the membership ID included in the command.

After executing or skipping the point granting process, the processor 101 proceeds to ACT 28. In ACT 28, the processor 101 sets the screen of the touch panel 106 to a settlement completion screen. The settlement completion screen is for notifying the customer that the settlement has been completed. After displaying the settlement completion screen, the processor 101 ends the information processing illustrated in the flowcharts in FIGS. 5 and 6. The self-service POS terminal 10 then returns to the idle state.

### Description of Point Settlement Process

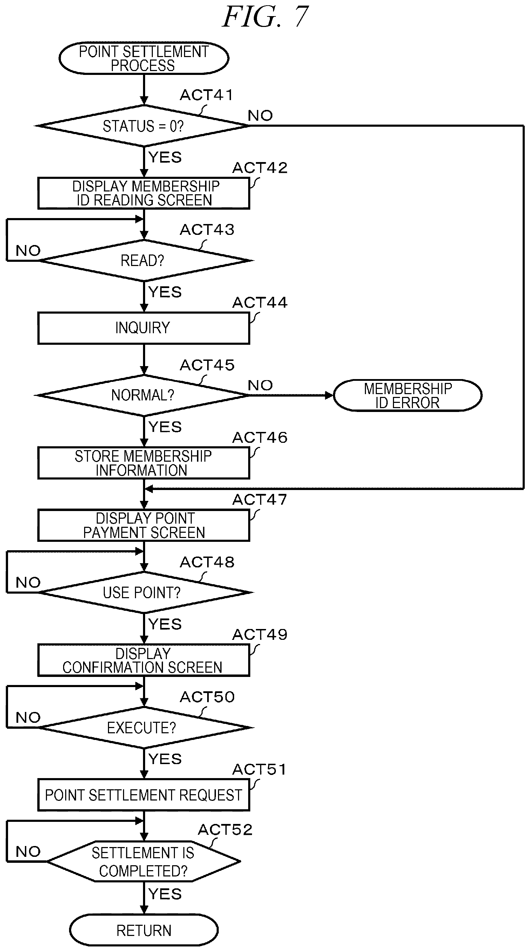

FIG. 7 is a flowchart illustrating the point settlement process. When the point settlement process is started, the processor 101 checks the status of the status memory in ACT 41. If the status is "1" or "2", that is, if the membership information was acquired through the biometric authentication, the processor 101 skips processes in ACT 42 to ACT 46.

On the other hand, if the status is "0", that is, if the membership information was not acquired, the processor 101 proceeds to ACT 42. In ACT 42, the processor 101 sets the screen of the touch panel 106 to a membership ID reading screen. The membership ID reading screen is for guiding the customer to use the card reader 109 to read a membership card or the like. After reviewing the membership ID reading screen, the customer can cause the card reader 109 to read the membership card.

The processor waits for reading of the membership card in ACT 43. Once the membership card is read by the card reader 109, the processor 101 proceeds to ACT 44. In ACT 44, the processor 101 controls the communication interface 105 to transmit an inquiry command to the customer management server 20. By this control, the inquiry command is transmitted to the customer management server 20 via the communication network 30. The inquiry command includes the membership ID of the membership card acquired in the process in ACT 43.

After receiving the inquiry command, the customer management server 20 searches the customer information database 21. The customer management server 20 detects the customer record 211 with the matching membership ID. After finding the matching customer record 211, the customer management server 20 transmits a normal response command to the self-service POS terminal 10. The normal response command includes the membership information included in the customer record 211, that is, data of the membership ID, the membership rank, and the accumulated points. If a customer record 211 having a matching membership ID cannot be found in the customer information database 21, the customer management server 20 transmits an error response command to the self-service POS terminal 10.

After transmitting the inquiry command, the processor 101 of the self-service POS terminal 10 waits for a response command in ACT 45. If an error response command is received from the customer management server 20, the processor 101 notifies a membership authentication error. Once the membership authentication error is cleared, the processor 101 returns to ACT 23. That is, the screen of the touch panel 106 is returned to the payment selection screen SCd. Therefore, a customer who is notified of a membership ID error may select another payment method.

If the normal response command is received from the customer management server 20 in ACT 45, the processor 101 proceeds to ACT 46. In ACT 46, the processor 101 stores, in a membership information memory, the membership information included in the normal response command.

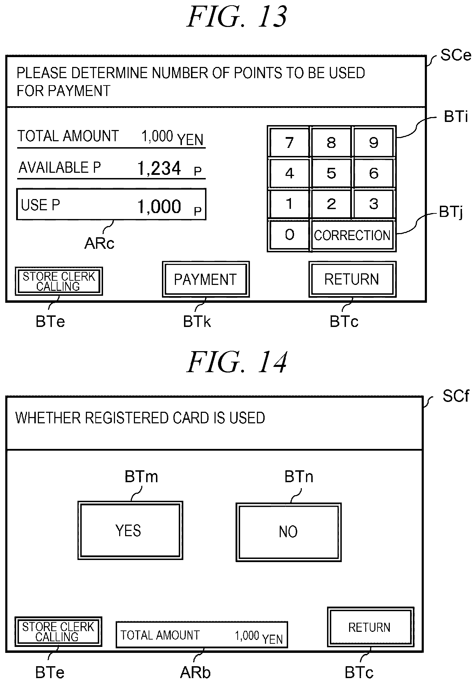

The processor 101 executes the processes in ACT 42 to ACT 46 if the status is "0" or skips the processes in ACT 42 to ACT 46 if the status is " 1" or "2", and then proceeds to ACT 47. In ACT 47, the processor 101 sets the screen of the touch panel 106 to a point payment screen SCe (see FIG. 13).

FIG. 13 shows a display example of a point payment screen SCe. As illustrated, the point payment screen SCe has arranged thereon a numeric keypad button BTi, a correction button BTj, and a payment button BTk in addition to the return button BTc and the store clerk calling button BTe. The point payment screen SCe displays a total amount due for a transaction and the available points, that is, the accumulated points acquired as part of the membership information. The point payment screen SCe further includes a use point display area ARc.

The numeric keypad button BTi is an operation piece for setting the number of points to use. The correction button BTj is for instructing a correction of the number of use points. The payment button BTk is for instructing payment using use points. If the available points are sufficient for payment of the total amount, the use point display area ARc displays points necessary for the payment of the total amount as the use points. If the available points are insufficient for the payment of the total amount, the available points are displayed as the use points. FIG. 13 illustrates a point payment screen SCe on which each point converts to one yen, this is merely an example.

A customer who desires to use the set use points directly touches the payment button BTk. A customer who desires to change the set use points operates the numeric keypad buttons BTi to set the desired points, and then touches the payment button BTk.

The processor 101 displaying the point payment screen SCe proceeds to ACT 48. In ACT 48, the processor 101 waits for an instruction to make the payment using the set points. When the payment button BTk is selected, the processor 101 proceeds to ACT 49. In ACT 49, the processor 101 sets the screen of the touch panel 106 to a confirmation screen. The confirmation screen is for confirming whether the customer actually intends to use the set points. The confirmation screen has arranged thereon an execution button for instructing that the points be used and a return button for instructing that the points be changed. A customer who desires to use the points as set touches the execution button. A customer who desires to change the points touches the return button.

After displaying the confirmation screen, the processor 101 proceeds to ACT 50. In ACT 50, the processor 101 waits for operation of the execution button. If the return button is touched in the standby state, the processor 101 returns to ACT 47. That is, the processor 101 returns the screen of the touch panel 106 to the point payment screen SCe. The customer changes the set points.

If the execution button is touched in ACT 50, the processor 101 proceeds to ACT 51. In ACT 51, the processor 101 controls the communication interface 105 to transmit a point settlement request command. By this control, the point settlement request command is transmitted to the customer management server 20 via the communication network 30. The point settlement request command includes the membership ID stored in the membership information memory and the set points acquired in the process in ACT 48.

After receiving the point settlement request command, the customer management server 20 searches the customer information database 21. The accumulated points in the customer record 211 are updated by subtracting the used points included in the point settlement request command. Thereafter, the customer management server 20 transmits a settlement completion command to the self-service POS terminal 10 from which the settlement request command is transmitted.

After transmitting the point settlement request command, the processor 101 of the self-service POS terminal 10 waits for the settlement completion command in ACT 52. Once the settlement completion command is received via the communication interface 105, the processor 101 ends the point settlement process. The processor 101 proceeds to ACT 26 in FIG. 6.

Here, the processor 101 executes the processes in ACT 41 to ACT 51 to implement the function of the membership processing unit 127. That is, if the third value is stored in the state storage unit 125, that is, if the status "0" is stored in the status memory (YES in ACT 41), the processor 101 waits for input of the membership identification information (ACT 42). In response to the input of the membership identification information, the processor 101 processes, as the payment amount of the transaction, the accumulated points of the membership identified by the membership identification information (ACT 43 to ACT 51).

On the other hand, if the first or second value is stored in the state storage unit 125, that is, if the status "1" or "2" is stored in the status memory (NO in ACT 41), the processor 101 processes, as the payment amount of the transaction, the accumulated points of the membership identified by the acquired membership identification information without inputting the membership identification information (ACT 47 to ACT 51). That is, the processor 101 skips the processes in ACT 42 to ACT 46, thereby simplifying the operation of the customer.

### Description of Credit Settlement Process

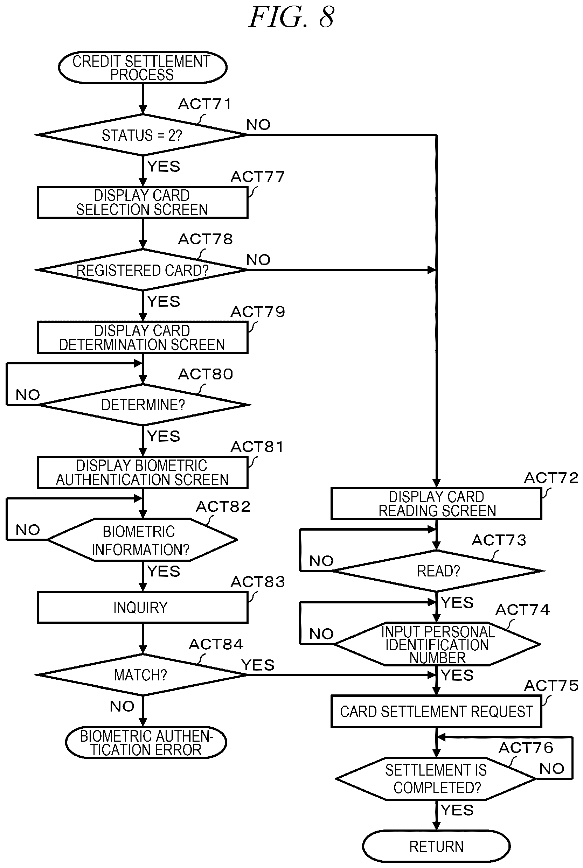

FIG. 8 is a flowchart illustrating the credit settlement process. When the credit settlement process is started, the processor 101 checks the status of the status memory in ACT 71. If the status is "0" or "1", that is, if the settlement medium information was not acquired through the biometric authentication, the processor 101 proceeds to ACT 72. In ACT 72, the processor 101 sets the screen of the touch panel 106 to a card reading screen. The card reading screen is for guiding the user to use the cashless settlement terminal 50 to read a credit card. After reviewing the card reading screen, the customer can cause the cashless settlement terminal 50 to read a credit card.

The processor 101 waits for reading of the credit card in ACT 73. After the credit card is read by the cashless settlement terminal 50, the processor 101 proceeds to ACT 74. The processor 101 waits for input of a personal identification number in ACT 74. Once the personal identification number is input via the pin pad of the cashless settlement terminal 50, the processor 101 controls the communication interface 105 to transmit a card settlement request command in ACT 75. By this control, a card settlement request command is transmitted to an external credit server or the like via the communication network 30. The card settlement request command includes information about the credit card acquired in ACT 73 and the personal identification number acquired in ACT 74.

After receiving the card settlement request command, the credit server performs authentication using the personal identification number. If it is confirmed that the credit card user provided the correct personal identification number, the credit server transmits a settlement completion command to the self-service POS terminal 10.

After transmitting the card settlement request command, the processor 101 of the self-service POS terminal 10 waits for the settlement completion command in ACT 76. After the settlement completion command is received via the communication interface 105, the processor 101 ends the credit settlement process. The processor 101 proceeds to ACT 26 in FIG. 6.

On the other hand, in ACT 71, if the status stored in the status memory is " 1" or "2", that is, if the settlement medium information was acquired through the biometric authentication, the processor 101 proceeds to ACT 77. In ACT 77, the processor 101 sets the screen of the touch panel 106 to a card selection screen SCf (see FIG. 14).

FIG. 14 shows an example of the card selection screen SCf. As illustrated, the card selection screen SCf has a "YES" button BTm and a "NO" button BTn arranged thereon, together with guidance for inquiring whether the customer wishes to use a registered card. In this context, a registered card is a credit card that the customer has previously registered in the customer management server 20 together with biometric information. The customer who desires to uses a registered card touches the "Yes" button BTm. The customer who does not desire to use a registered card touches the "No" button BTm.

The processor 101 proceeds to ACT 78. If the "No" button BTm was touched, that is, if the customer does not desire to use a registered card, the processor 101 proceeds to ACT 72. Then, the processor 101 executes the processes in ACT 72 to ACT 76 in the same manner as described above.

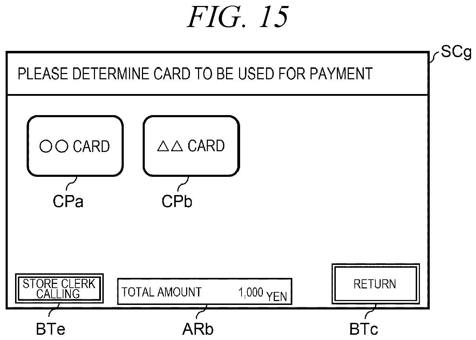

On the other hand, if the "Yes" button BTm was touched, that is, if the customer desires to use a registered card, the processor 101 proceeds to ACT 79. In ACT 79, the processor 101 sets the screen of the touch panel 106 to a card determination screen SCg (see FIG. 15).

FIG. 15 shows an example of the card determination screen SCg. As illustrated, the registered cards are displayed on the card determination screen SCg. The card determination screen SCg in FIG. 15 is one example of the card determination screen SCg displayed for a customer who has registered two different credit cards. That is, a first type of registered card CPa and a second type of registered card CPb are displayed as options on the card determination screen SCg. Incidentally, if the customer has only one credit card registered, then only the one registered card would be displayed. After reviewing the card determination screen SCg, the customer selects the registered card to be used.

The processor 101 proceeds to ACT 80. The processor 101 waits for the determination (selection) of the registered card to be used. Once a registered card option displayed on the card determination screen SCg is touched, the processor 101 selects that registered card as the credit card to be used. The processor 101 proceeds to ACT 81. The processor 101 switches the screen of the touch panel 106 to the biometric authentication screen SCb (see FIG. 10). After reviewing the biometric authentication screen SCb, the customer holds a finger over the biometric authentication sensor 40 to read the fingerprint of that finger.

In ACT 82, the processor 101 waits for acquisition of the biometric information. After the biometric information read by the biometric authentication sensor 40, that is, the fingerprint information is acquired via the second device interface 111, the processor 101 proceeds to ACT 83. In ACT 83, the processor 101 controls the communication interface 105 to transmit an inquiry command to the customer management server 20. By this control, the inquiry command is transmitted to the customer management server 20 via the communication network 30. The inquiry command includes the biometric information acquired in the process in ACT 82.

After receiving the inquiry command, the customer management server 20 searches the customer information database 21. The customer management server 20 detects biometric information matching the biometric information included in the inquiry command to find the customer record 211 in which the corresponding fingerprint information is registered. After finding the corresponding customer record 211, the customer management server 20 transmits a normal response command to the self-service POS terminal 10. The normal response command includes the membership information included in the customer record 211.

After transmitting the inquiry command, the processor 101 proceeds to ACT 84. In ACT 84, the processor 101 confirms whether the membership ID included in the normal response command from the customer management server 20 matches the membership ID stored in the membership information memory. If the membership IDs do not match, the processor 101 notifies of a biometric authentication error. Once the biometric authentication error is cleared, the processor 101 returns to ACT 23. That is, the screen of the touch panel 106 is returned to the payment selection screen SCd. Therefore, a customer who was notified of the biometric authentication error may select another credit card or another payment method.

If the membership IDs match in ACT 84, the processor 101 proceeds to ACT 75. That is, the processor 101 controls the communication interface 105 to transmit a card settlement request command. By this control, the card settlement request command is transmitted to an external credit server via the communication network 30. The card settlement request command includes information about the credit card selected to be used in the process in ACT 80. The biometric information also includes information indicating that personal authentication has been completed.

After receiving the card settlement request command, the credit server transmits the settlement completion command to the self-service POS terminal 10, since the user authentication has already been completed.

After transmitting the card settlement request command, the processor 101 of the self-service POS terminal 10 waits for the settlement completion command in ACT 76. Once the settlement completion command is received via the communication interface 105, the processor 101 ends the credit settlement process. The processor 101 proceeds to ACT 26 in FIG. 6.

In this example, the processor 101 executes the processes in ACT 71 to ACT 84 to implement the functions of the settlement processing unit 128. That is, if the first or second value is stored in the state storage unit 125, that is, if the status "0" or "1" is stored in the status memory (NO in ACT 71), the processor 101 waits for the information about a credit card to be used by the user and the input of the personal identification number (ACT 72 to ACT 74). In response to the input of the information on the = credit card and the personal identification number via the cashless settlement terminal 50, the processor 101 settles the transaction with the user using the credit card (ACT 75).

On the other hand, if the third value is stored in the state storage unit 125, that is, if the status "2" is stored (YES in ACT 71), the processor 101 settles the transaction with the user using the credit card without requiring input of the personal identification number (ACT 77 to ACT 84 and ACT 75). That is, the processor 101 skips the processes ACT 72 to ACT 74, thereby simplifying the operations of the customer at the cashless settlement terminal 50.

### Effects

As described above, according to an embodiment, since personal verification is performed using the biometric information, the customer can receive a membership service such as a point payment even without carrying a membership card, a credit card, or a smartphone. Likewise, a cashless settlement by credit card is possible even without the card being present or presented.

There is no need to use a card reader to read a membership card or a credit card, or to use a scanner to read a bar code displayed on a smartphone or the like, and thus such a troublesome operation can be eliminated and user operability and convenience can be improved.

### Other Embodiments

Cashless settlement processed by the settlement processing unit 128 is not limited to a credit card settlement. For example, electronic money or an electronic money service can be used instead of a credit card settlement. In such a case, biometric information can be registered in the customer management server 20 in association with such payment method, and thus the present embodiment can be applied in a similar manner as for credit cards.

A membership service processed by the membership processing unit 127 is not limited to a point payment. For example, the membership service may relate to a sales price of a commodity being provided at a membership price or the subtotal of a transaction being discounted at a predetermined discount rate for members.

The biometric information to be utilized is not limited to fingerprint information. In general, any type of biometric information that can be used for biometric authentication, such as a palm print, iris, or face, may be utilized.

In the processing associated with FIG. 8, if there is only one registered card that can be used, processes in ACT 79 and ACT 80 may be omitted.

In the processing associated with FIG. 8, processes in ACT 81 to ACT 84 may also be omitted in some examples. That is, a card settlement request command may be transmitted to a credit server without re-authentication of the biometric information if there is only one type of registered card or the card has already been determined.

The transaction processing device is not limited to being just a self-service POS terminal 10. For example, the transaction processing device may be a checkout machine (settlement kiosk) of a transaction processing system in which a registration machine and a checkout machine are separated from each other. The transaction processing device may be a face-to-face POS terminal at which a store clerk performs the registration operation and the checkout operation.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims are intended to cover such forms or modifications as would fall within the scope of the disclosure.

## Claims

1. A transaction processing system (1), comprising:
a storage device (20) configured to store membership identification information of a member and settlement medium information of the member in association with biometric information of the member;
a reading device (40) configured to read biometric information from a user; and
a transaction processing device (10) configured to:
receive the biometric information of the user read by the reading device;
acquire information from the storage device when the received biometric information of the user matches biometric information of the member stored in the storage device; and
settle a transaction of the user without additional authentication if the acquired information from the storage device includes a member ID and settlement medium information.

2. The transaction processing system according to claim 1, wherein the transaction processing device is further configured to:
store a value indicating a first state in a state storage unit if the acquired information from the storage device includes the member ID and the settlement medium information;
store a value indicating a second state in the state storage unit if the acquired information from the storage device includes just the member ID; and
store a value indicating a third state in the state storage unit if the acquired information included neither the member ID nor the settlement medium information.

3. The transaction processing system according to claim 2, wherein the transaction processing device performs a different process depending on the value stored in the state storage unit.

4. The transaction processing system according to claim 2 or 3, wherein the transaction processing device is further configured to receive a selection of a credit card payment as a payment method for settling the transaction with the user.

5. The transaction processing system according to any one of claims 1 to 4, wherein the settlement medium information is information about a pre-registered credit card of the user associated with the member ID.

6. The transaction processing system according to any one of claims 1 to 5, wherein the settlement medium information is information about an electronic money account of the user associated with the member ID.

7. The transaction processing system according to any one of claims 1 to 6, wherein the acquired information includes an accumulated point total associated with the member ID.

8. The transaction processing system according to any one of claims 1 to 7, wherein the reading device is a fingerprint reader.

9. The transaction processing system according to any one of claims 1 to 8, wherein the storage device is a customer management server connected via a network to a plurality of transaction processing devices.

10. The transaction processing system according to any one of claims 1 to 9, wherein the transaction processing device is a self-service point-of-sale terminal.

11. A transaction processing device for the transaction processing system of any one of claims 1 to 10, comprising:
a communication interface configured to connect to a storage device that stores membership identification information of a member and settlement medium information of the member in association with biometric information of the member;
a device interface configured to connect to a reading device that reads biometric information from a user;
a processor configured to:
receive, via the device interface, the biometric information of the user read by the reading device;
acquire, via the communication interface, information from the storage device when the received biometric information of the user matches biometric information of the member stored in the storage device; and
settle a transaction of the user without additional authentication if the acquired information from the storage device includes a member ID and settlement medium information.

12. The transaction processing device according to claim 11, wherein the processor is further configured to:
store a value indicating a first state in a state storage unit if the acquired information from the storage device includes the member ID and the settlement medium information;
store a value indicating a second state in the state storage unit if the acquired information from the storage device includes just the member ID; and
store a value indicating a third state in the state storage unit if the acquired information included neither the member ID nor the settlement medium information, and preferably the processor performs a different process depending on the value stored in the state storage unit, preferably wherein the processor is further configured to receive, via a user input device, a selection of a credit card payment as a payment method for settling the transaction with the user.

13. The transaction processing device according to claim 11, wherein the settlement medium information is information about a pre-registered credit card of the user associated with the member ID, and/or information about an electronic money account of the user associated with the member ID, preferably wherein the acquired information includes an accumulated point total associated with the member ID.

14. A non-transitory, computer-readable medium storing program instructions which when executed by the transaction processing device of transaction processing system of any one of claims 1 to 10 causes the transaction processing device to perform a method comprising:
receive, via a device interface, biometric information of a user read by a reading device;
acquire, via a communication interface, information from a storage device when the received biometric information of the user matches biometric information of a member stored in the storage device; and
settle a transaction of the user without additional authentication if the acquired information from the storage device includes a member ID and settlement medium information.

15. The non-transitory, computer-readable medium according to claim 14, wherein the method further includes:
store a value indicating a first state in a state storage unit if the acquired information from the storage device includes the member ID and the settlement medium information;
store a value indicating a second state in the state storage unit if the acquired information from the storage device includes just the member ID; and
store a value indicating a third state in the state storage unit if the acquired information included neither the member ID nor the settlement medium information,
and/or wherein the method further includes:
receive, via a user input device, a selection of a credit card payment as a payment method for settling the transaction with the user.
